# EUROPEAN PATENT APPLICATION

(11) **EP 4 336 595 A1**
(43) Date of publication of application: **13.03.2024**
(21) Application number: 22306335.5
(22) Date of filing: 09.09.2022
(51) Int. Cl.: H01M 4/62, H01M 4/04, H01M 4/131, H01M 4/136, H01M 4/1391, H01M 4/1397, H01M 4/525, H01M 4/58

(54) **BINDER FOR ELECTRODE COMPRISING POLY(VINYLIDENE FLUORIDE) AND A HYDROPHILIC POLYMER**

(71) Applicant: ARKEMA FRANCE, 92700 Colombes (FR)
(72) Inventor: LIU, Yuanqin, KING OF PRUSSIA, 19406-0936 (US); KAHN, Andrew, KING OF PRUSSIA, 19406-0936 (US); KENT, Daniel, KING OF PRUSSIA, 19406-0936 (US); LI, Nan, KING OF PRUSSIA, 19406-0936 (US); MATHIEU, Cyrille, 69491 PIERRE-BENITE CEDEX (FR)
(74) Representative: Arkema Patent

(57) **Abstract**

The present invention relates to a binder composition for positive electrodes comprising a polymer P1 comprising recurring units derived from vinylidene fluoride and a hydrophilic polymer P2 comprising recurring units derived from at least one monomer of formula R¹R²C=C(R³)C(O)R(I) wherein R¹, R² and R³ are independently selected from the group consisting of H and C₁-C₅ alkyl; R is selected from the group consisting of -NHC(CH₃)₂CH₂C(O)CH₃, -NR'R"or -OR' wherein R' and R" are independently selected from the group consisting of H and C₁-C₁₈ alkyl groups optionally substituted by one or more hydroxyl, thiol or amino functional group(s) or a five- to six-membered heterocycle comprising at least one nitrogen atom in the ring ; characterized in that the weight average molecular weight of said hydrophilic polymer P2 is greater than 30000 g/mol, advantageously greater than 50000 g/mol, preferably greater than 65000 g/mol, more preferably greater than 80000 g/mol.

## Description

### Field of the invention

The present invention relates generally to the field of electrical energy storage in rechargeable secondary batteries of Li-ion type. More precisely, the present invention relates to a binder for electrode comprising a mixture of at least two polymers, at least one being a fluoropolymer.

### Technical background

Lithium batteries, including lithium metal batteries, lithium ion batteries, lithium polymer batteries, and lithium ion polymer batteries are finding increased use due to higher voltages and higher energy densities than those of conventional batteries (such as Ni-MH batteries).

An elementary cell of a Li-ion storage battery or lithium battery comprises an anode (at discharge), and a cathode (likewise at discharge) generally made of a lithium insertion compound of metal oxide type, such as LiMn₂O₄, LiCoO₂ or LiNiO₂, between which is inserted an electrolyte which conducts lithium ions.

Rechargeable or secondary cells are more advantageous than primary (non-rechargeable) cells because the associated chemical reactions that take place at the positive and negative electrodes of the battery are reversible. The electrodes of secondary cells can be regenerated several times by applying an electrical charge. Many advanced electrode systems have been developed to store electrical charge. At the same time, much effort has been devoted to the development of electrolytes capable of improving the capabilities of electrochemical cells.

For their part, the electrodes generally comprise at least one current collector on which is coated, in the form of a film, a composite material consisting of a so-called active material because it has an electrochemical activity with respect to lithium, a polymer which acts as a binder, plus one or more electronically conductive additives which are generally carbon black or acetylene black, and optionally a surfactant.

Binders are counted among the so-called inactive components because they do not directly contribute to the cell capacity. However, their key role in electrode processing and their considerable influence on the electrochemical performance of electrodes have been widely described. The main relevant physical and chemical properties of binders are the thermal stability, the chemical and electrochemical stability, tensile strength (strong adhesion and cohesion), and flexibility. The main objective of using a binder is to form stable networks of the solid components of the electrodes, i.e. the active materials and the conductive agents (cohesion). In addition, the binder must ensure close contact of the composite electrode to the current collector (adhesion).

Poly(vinylidene fluoride) (PVDF) is used as a binder in lithium-ion batteries because of its excellent electrochemical stability, good bonding capability and high adhesion to electrode materials and current collectors. In wet slurry processes for preparing an electrode, active materials and binders are dispersed in a liquid solution. The liquid solution is usually based on organic solvents or water. The dispersion is cast on a current collector, then dried in a high temperature oven to produce an electrode. Unfortunately, the excellent properties provided by fluoropolymers such as PVDF can also limit the applications in which they can be used. For example, it is difficult to adhere fluoropolymers to other materials. Therefore, organic solvent and other organic additives are generally used in a coating formulation to provide good adhesion (non-reversible adhesion) between PVDF-based polymers, a porous separator or electrode, and optionally added powdery particles. Alternatively, fluoropolymer binders can bear functional groups to favor the adhesive behavior of the polymer. For example, US 2020/0407543 discloses a polymer binder composition comprising two or more different phases wherein said phases comprise a highly crystalline fluoropolymer phase and an adhesive fluoropolymer phase, said adhesive fluoropolymer bearing functional groups.

It is also disclosed in the art, binder compositions comprising a mixture of vinylidene fluoride polymer and acrylic polymer. For example, US 2013/252077 describes an electrode for a lithium-ion battery which operates with a nonaqueous electrolyte. This electrode comprises an active substance and a binder comprising a vinylidene fluoride polymer and an acrylic polymer. EP 2 953 193 describes a binder for a lithium-ion battery comprising a fluoropolymer and an acrylic polymer containing a nitrile group. WO 97/27260 describes an electrode which comprises a collector made of metal coated with a layer comprising an active substance and a binder. This binder comprises at least two of the following three components: a vinylidene fluoride polymer, an acrylic or methacrylic polymer comprising functional groups capable of fixing to the metal and a vinylidene fluoride copolymer. EP 3 796 430 discloses an electrode mixture comprising a binder composition containing a vinylidene fluoride copolymer and an acrylic polymer having low weight average molecular weight. However, the adhesion of the binder composition is still not satisfactory and can still be improved.

Therefore, there is still a need to develop new binders and electrode compositions for Li-ion batteries having improved adhesion while maintaining slurry stability in particular with active material having high nickel content or based on lithium metal phosphate.

### Summary of the invention

According to a first aspect, the present invention provides a binder composition for positive electrodes comprising a polymer **PI** comprising recurring units derived from vinylidene fluoride and a hydrophilic polymer **P2** comprising at least recurring units derived from at least one monomer **M1** of formula R¹R²C=C(R³)C(O)R (I) wherein R¹, R² and R³ are independently selected from the group consisting of H and C₁-C₅ alkyl ; R is selected from the group consisting of - NHC(CH₃)₂CH₂C(O)CH₃, -NR'R" or -OR' wherein R' and R" are independently selected from the group consisting of H and C₁-C₁₈ alkyl groups, optionally substituted by one or more hydroxyl, thiol or amino functional group(s) or a five- to six-membered heterocycle comprising at least one nitrogen atom in the ring ; characterized in that the weight average molecular weight of said hydrophilic polymer **P2** is greater than 30000 g/mol, advantageously greater than 50000 g/mol, preferably greater than 65000 g/mol, more preferably greater than 80000 g/mol.

The present invention provides a binder with improved adhesion to the electrode while also maintaining slurry stability when used in an electrode coating formulation. It has been surprisingly found by the applicant that the molecular weight of the hydrophilic polymer (noted **P2** in the present application) strongly influences the adhesion properties of said binder. According to a preferred embodiment, said polymer **PI** and said polymer **P2** form an interpenetrating polymer network. It has been surprisingly observed by the applicant that when an interpenetrating polymer network is present, the adhesion properties of the binder is further improved.

According to a preferred embodiment, said interpenetrating polymer network is obtained by polymerizing at least one said monomer **(M1)** of formula R¹R²C=C(R³)C(O)R (I) in the presence of said polymer **PI** used as a seed.

According to a preferred embodiment, said polymer **PI** is selected from the group consisting of polyvinylidene fluoride homopolymers and copolymers based on polyvinylidene fluoride comprising at least one comonomer compatible with vinylidene fluoride.

According to a preferred embodiment, said comonomer is selected from the group consisting of vinyl fluoride, tetrafluoroethylene, hexafluoropropylene, trifluoropropenes, tetrafluoropropenes, hexafluoroisobutylene, perfluorobutylethylene, pentafluoropropenes, perfluoroalkyl vinyl ethers, bromotrifluoroethylene, chlorofluoroethylene, chlorotrifluoroethylene, chlorotrifluoropropene and ethylene, or mixture thereof.

According to one embodiment, said polymer **PI** comprises monomer units bearing at least one of the following functions: carboxylic acid, carboxylic acid anhydride, carboxylic acid ester, epoxy groups, amide, hydroxyl, carbonyl, mercapto, sulfide, oxazoline, phenolic, ester, ether, siloxane, sulfonic, sulfuric, phosphoric or phosphonic.

According to a preferred embodiment, said hydrophilic polymer **P2** comprises at least recurring units derived from at least one monomer **M1** selected from the group consisting of acrylic acid, methacrylic acid, methyl acrylate, methyl methacrylate, ethyl acrylate, propyl acrylate, n-butyl acrylate, isobutyl acrylate, t-butyl acrylate, n-dodecyl acrylate, amyl acrylate, isoamyl acrylate, hexyl acrylate, 2-ethylhexyl acrylate, diacetone acrylamide, lauryl acrylate, n-octyl acrylate, ethyl methacrylate, propyl methacrylate, n-butyl methacrylate, isobutyl methacrylate, t-butyl methacrylate, n-dodecyl methacrylate, amyl methacrylate, isoamyl methacrylate, hexyl methacrylate, 2-ethylhexyl methacrylate, lauryl methacrylate, n-octyl methacrylate, 2-hydroxyethyl methacrylate, 2-hydroxypropyl acrylate, 4-hydroxybutyl methacrylate, and combinations thereof.

According to a preferred embodiment, the mass ratio **P1/P2** varies from 99/1 to 5/95. According to a second aspect, the present invention provides a process for the production of a binder composition comprising the steps of:
a) Providing an aqueous solution comprising a polymer **PI** comprising recurring units derived from vinylidene fluoride ;
b) Adding at least one monomer **M1** of formula R¹R²C=C(R³)C(O)R (I) as defined in the present application and optionally one or more monomer(s) from which the recurring units of hydrophilic polymer **P2** derive ;
c) Adding an initiator and initiating the polymerization of said monomer **M1**, and optionally one or more monomer(s) from which the recurring units of hydrophilic polymer **P2** derive, to produce the binder composition according to the present invention.

According to a preferred embodiment, step b) in carried out in the absence of chain transfer agent or in the presence of less than 1.2 wt% of chain transfer agent, preferably less than 1.0 wt% based on the total weight of all the monomer(s) added in step b).

According to a third aspect, the present invention provides an electrode composition comprising said binder composition according to the present invention, conductive agents and an active material.

According to a preferred embodiment, said conductive agents comprise one or more material selected from carbon black, carbon nanotubes, carbon fibers or metal powders.

According to a preferred embodiment, said active material is selected from the group consisting of lithium-salts of transition metal oxides, sulfides, phosphate and hydroxides ; preferably said active material is selected from the group consisting of a lithium metal phosphate having a composition represented by LiMPO₄, M representing Fe, Mn, Co, or Ni, LiCoO₂, LiNiₓCo₁₋ₓO₂, LiMn₂O₂, LiNiO₂, LiNiₓCo_{y}Mn_{z}Oₘ, LiNiₓCo_{y}Al_{z}Oₘ and LiNiₓMn_{y}Al_{z}Oₘ where x+y+z =1 and m is an integer representing the number of oxygen atom in the oxide to provide an electron-balanced molecule; in particular said active material is selected from the group consisting of LiFePO₄ and LiNiₓCo_{y}Mn_{z}Oₘ wherein x is greater than or equal to 0.6, y is lower than or equal to 0.2, z is greater than or equal to 0.2, and x+y+z =1 and m is an integer representing the number of oxygen atom in the oxide to provide an electron-balanced molecule.

According to a fourth aspect, the present invention provides a positive electrode comprising a current collector and an electrode composition according to the present invention disposed on at least one surface on said current collector.

According to a fifth aspect, the present invention provides a Li-ion secondary battery comprising a negative electrode, a positive electrode according to the present invention and a separator between said negative electrode and said positive electrode.

According to a sixth aspect, the present invention provides an electrochemical device comprising a negative electrode, a positive electrode according to the present invention, and an electrolyte comprising lithium.

### Detailed description of the invention

The invention is now described in more detail and in a nonlimiting way in the description which follows. According to various implementations, said binder comprises the following features, in combination where appropriate. The contents indicated are expressed by weight, unless otherwise indicated. For all the indicated ranges, the limits are included unless otherwise indicated.

According to a first aspect of the present invention, a binder composition for positive electrodes is provided. According to a preferred embodiment, the binder composition comprises a polymer **PI** and a hydrophilic polymer **P2** as defined in the present application. The material is used as a polymeric binder or adhesion component on a positive electrode. Surprisingly, it has been found that the binder composition comprising particles of a fluoropolymer **PI** and hydrophilic polymer **P2** provides a better compromise of properties compared to known compositions consisting of a fluoropolymer.

Said polymer **P1** comprises recurring units derived from vinylidene fluoride (CH₂=CF₂). In a preferred embodiment, said polymer **P1** is selected from the group consisting of polyvinylidene fluoride homopolymers and copolymers based on polyvinylidene fluoride comprising at least one comonomer compatible with vinylidene fluoride. The comonomers compatible with vinylidene fluoride can be halogenated (fluorinated, chlorinated or brominated) or non-halogenated.

Said comonomer may be selected from the group consisting of vinyl fluoride, tetrafluoroethylene, hexafluoropropylene, trifluoropropenes, tetrafluoropropenes, hexafluoroisobutylene, perfluorobutylethylene, pentafluoropropenes, perfluoroalkyl vinyl ethers, bromotrifluoroethylene, chlorofluoroethylene, chlorotrifluoroethylene, chlorotrifluoropropene and ethylene, or mixture thereof.

Examples of trifluoropropenes is in particular 3,3,3-trifluoropropene. Tetrafluoropropenes may be for example 2,3,3,3-tetrafluoropropene or 1,3,3,3-tetrafluoropropene. Pentafluoropropenes may be for example 1,1,3,3,3-pentafluoropropene or 1,2,3,3,3-pentafluoropropene. Perfluoroalkyl vinyl ethers are for example those of general formula Rf-O-CF=CF2, Rf being an alkyl group, preferably a C1 to C4 alkyl group (preferred examples being perfluoropropyl vinyl ether and perfluoromethyl vinyl ether). Chlorofluoroethylene can denote either 1-chloro-1-fluoroethylene or 1-chloro-2-fluoroethylene. The 1-chloro-1-fluoroethylene isomer is preferred. Chlorotrifluoropropene is preferably 1-chloro-3,3,3-trifluoropropene or 2-chloro-3,3,3-trifluoropropene.

Said polymer **P1** may also comprise non-halogenated monomers such as ethylene and/or acrylic or methacrylic acid comonomers.

Said polymer **P1** may contain at least 50 mol% of vinylidene fluoride, advantageously at least 60 mol% of vinylidene fluoride, preferably at least 70 mol% of vinylidene fluoride, more preferably at least 80 mol% of vinylidene fluoride, in particular at least 90 mol% of vinylidene fluoride.

In one embodiment, said polymer **P1** may comprise monomer units bearing at least one of the following functions: carboxylic acid, carboxylic acid anhydride, carboxylic acid ester, epoxy groups (such as glycidyl), amide, hydroxyl, carbonyl, mercapto, sulfide, oxazoline, phenolic, ester, ether, siloxane, sulfonic, sulfuric, phosphoric or phosphonic. The function is introduced by a chemical reaction which can be grafting or a copolymerization of the fluoromonomer with a monomer bearing at least one of said functional groups and a vinyl function capable copolymerizing with the fluoromonomer, according to techniques well known to a person skilled in the art.

According to one embodiment, said polymer **P1** may comprise recurring units bearing a carboxylic acid function which is a group of (meth)acrylic acid type chosen from acrylic acid, methacrylic acid, hydroxyethyl (meth)acrylate, hydroxypropyl (meth)acrylate and hydroxyethylhexyl (meth)acrylate.

According to one embodiment, the units bearing the carboxylic acid function may additionally comprise a heteroatom chosen from oxygen, sulfur, nitrogen and phosphorus.

According to one embodiment, the functionality is introduced by means of the transfer agent used during the synthesis process. The transfer agent is a polymer of molar mass less than or equal to 20 000 g/mol and bearing functional groups chosen from the groups: carboxylic acid, carboxylic acid anhydride, carboxylic acid ester, epoxy groups (such as glycidyl), amide, hydroxyl, carbonyl, mercapto, sulfide, oxazoline, phenolic, ester, ether, siloxane, sulfonic, sulfuric, phosphoric or phosphonic. One example of a transfer agent of this type is oligomers of acrylic acid. According to a preferred embodiment, the transfer agent is an oligomer of acrylic acid of molar mass less than or equal to 20 000 g/mol.

The content of functional groups of the polymer **P1** is at least 0.01 mol%, preferably at least 0.1 mol%, and at most 15 mol%, preferably at most 10 mol%.

In a particular embodiment, said polymer **P1** is a homopolymer of vinylidene fluoride or said polymer **P1** comprises recurring units derived from vinylidene fluoride and recurring units bearing a carboxylic acid function which is a group of (meth)acrylic acid type chosen from acrylic acid, methacrylic acid, hydroxyethyl (meth)acrylate, hydroxypropyl (meth)acrylate and hydroxyethylhexyl (meth)acrylate.

The polymer **P1** preferably has a high molecular weight. The term "high molecular weight", as used here, is understood to mean a polymer **P1** having a melt viscosity of greater than 100 Pa.s, preferably of greater than 500 Pa.s, more preferably of greater than 1000 Pa.s, according to the ASTM D-3835 method, measured at 232°C and 100 sec-1.

The polymer **P1** used in the invention can be obtained by known polymerization methods, such as emulsion or suspension polymerization. According to one embodiment, they are prepared by an emulsion polymerization process in the absence of a fluorinated surfactant.

The polymerization of the polymer **P1** results in a latex generally having a solids content of from 10% to 60% by weight, preferably from 10% to 50%, and having a volume-average particle size of less than 1 micrometre, preferably less than 1000 nm, preferably of less than 800 nm and more preferably of less than 600 nm. The volume-average size of the particles is generally at least 20 nm, preferably at least 50 nm, and advantageously the average size is within the range from 100 to 400 nm. The polymer particles can form agglomerates, the volume-average size of which is from 1 to 30 micrometres and preferably from 2 to 10 micrometres. Nicomp CW380 Particle Size Analyzer (light scattering) is used to measure the volume average particle size of the latex particles. The agglomerates can break up into discrete particles during the formulation and the application to a substrate.

According to some embodiments, the polymer **PI** (homopolymer or copolymers) are composed of biobased vinylidene fluoride. The term "biobased" means "resulting from biomass". This makes it possible to improve the ecological footprint of the membrane. Biobased vinylidene fluoride can be characterized by a content of renewable carbon, that is to say of carbon of natural origin and originating from a biomaterial or from biomass, of at least 1 atom%, as determined by the content of 14C according to Standard NF EN 16640. The term "renewable carbon" indicates that the carbon is of natural origin and originates from a biomaterial (or from biomass), as indicated below. According to some embodiments, the biocarbon content of the VDF can be greater than 5%, preferably greater than 10%, preferably greater than 25%, preferably greater than or equal to 33%, preferably greater than 50%, preferably greater than or equal to 66%, preferably greater than 75%, preferably greater than 90%, preferably greater than 95%, preferably greater than 98%, preferably greater than 99%, advantageously equal to 100%.

As mentioned above, the binder composition comprises a hydrophilic polymer P2. Said hydrophilic polymer **P2** comprises at least recurring units derived from at least one monomer **M1** of formula R¹R²C=C(R³)C(O)R (I) wherein R¹, R² and R³ are independently selected from the group consisting of H and C₁-C₅ alkyl ; R is selected from the group consisting of - NHC(CH₃)₂CH₂C(O)CH₃, -NR'R" or OR' wherein R' and R" are independently selected from the group consisting of H and C₁-C₁₈ alkyl groups optionally substituted by one or more hydroxyl, thiol or amino functional group(s) or a five- to six-membered heterocycle comprising at least one nitrogen atom in the ring.

In a preferred embodiment, said monomer **M1** is of formula R¹R²C=C(R³)C(O)R (I) wherein R¹, R² and R³ are independently selected from the group consisting of H and C₁-C₅ alkyl; R is selected from the group consisting of -NHC(CH₃)₂CH₂C(O)CH₃, -NR'R" or OR' wherein R' and R" are independently selected from the group consisting of H and C₁-C₁₅ alkyl optionally substituted by one or more hydroxyl, thiol or amino functional group(s) or a five- to six-membered heterocycle comprising at least nitrogen atom in the ring.

In a preferred embodiment, said monomer **M1** is of formula R¹R²C=C(R³)C(O)R (I) wherein R¹, R² and R³ are independently selected from the group consisting of H and C₁-C₅ alkyl; R is selected from the group consisting of -NHC(CH₃)₂CH₂C(O)CH₃, -NR'R" or OR' wherein R' and R" are independently selected from the group consisting of H and C₁-C₁₀ alkyl optionally substituted by one or more hydroxyl, thiol or amino functional group(s) or a five- to six-membered heterocycle comprising at least nitrogen atom in the ring.

In a preferred embodiment, said monomer **M1** is of formula R¹R²C=C(R³)C(O)R (I) wherein R¹, R² and R³ are independently selected from the group consisting of H and C₁-C₅ alkyl; R is selected from the group consisting of -OR' wherein R' is selected from the group consisting of H and C₁-C₁₀ alkyl optionally substituted by one or more -OH functional group(s).

In a preferred embodiment, said monomer **M1** is of formula R¹R²C=C(R³)C(O)R (I) wherein R¹, R² and R³ are independently selected from the group consisting of H and C₁-C₃ alkyl; R is selected from the group consisting of -OR' wherein R' is selected from the group consisting of H and C₁-C₁₀ alkyl optionally substituted by one or more -OH functional group(s).

In a more preferred embodiment, said monomer **M1** is of formula R¹R²C=C(R³)C(O)R (I) wherein R¹, R² and R³ are independently selected from the group consisting of H and C₁-C₃ alkyl ; R is selected from the group consisting of -OR' wherein R' is selected from the group consisting of H and C₁-C₅ alkyl optionally substituted by one or more -OH functional group(s).

In a preferred embodiment, said hydrophilic polymer P2 comprises at least recurring units derived from at least one monomer **M1** selected from the group consisting of acrylic acid, methacrylic acid, methyl acrylate, methyl methacrylate, ethyl acrylate, propyl acrylate, n-butyl acrylate, isobutyl acrylate, t-butyl acrylate, n-dodecyl acrylate, amyl acrylate, isoamyl acrylate, hexyl acrylate, 2-ethylhexyl acrylate, diacetone acrylamide, lauryl acrylate, n-octyl acrylate, ethyl methacrylate, propyl methacrylate, n-butyl methacrylate, isobutyl methacrylate, t-butyl methacrylate, n-dodecyl methacrylate, amyl methacrylate, isoamyl methacrylate, hexyl methacrylate, 2-ethylhexyl methacrylate, lauryl methacrylate, n-octyl methacrylate, 2-hydroxyethyl methacrylate, 2-hydroxypropyl acrylate, 4-hydroxybutyl methacrylate, and combinations thereof. Among these, alkyl acrylates with an alkyl group having from 1 to 8 carbon atoms are preferred, and alkyl acrylates with an alkyl group having from 1 to 5 carbon atoms are more preferable. These compounds may be used alone or as a mixture of two or more. In a more preferred embodiment, said hydrophilic polymer **P2** comprises at least recurring units derived from at least one monomer **M1** selected from the group consisting of acrylic acid, methacrylic acid, methyl acrylate, methyl methacrylate, ethyl acrylate, propyl acrylate, n-butyl acrylate, isobutyl acrylate, t-butyl acrylate, amyl acrylate, isoamyl acrylate, ethyl methacrylate, propyl methacrylate, n-butyl methacrylate, isobutyl methacrylate, t-butyl methacrylate, amyl methacrylate, isoamyl methacrylate, 2-hydroxyethyl methacrylate, 2-hydroxypropyl acrylate, 4-hydroxybutyl methacrylate, and combinations thereof; in particular selected from the group consisting of acrylic acid, methacrylic acid, methyl acrylate, methyl methacrylate, ethyl acrylate, propyl acrylate, ethyl methacrylate, propyl methacrylate, 2-hydroxyethyl methacrylate, 2-hydroxypropyl acrylate, 4-hydroxybutyl methacrylate, and combinations thereof.

In a preferred embodiment, the weight average molecular weight Mw of said hydrophilic polymer **P2** is greater than 30000 g/mol, advantageously greater than 40000 g/mol, preferably greater than 50000 g/mol, more preferably greater than 65000 g/mol, in particular greater than 80000 g/mol, more particularly greater than 100000 g/mol.

Said hydrophilic polymer **P2** may also contain recurring units derived from monomers **M2** copolymerizable with said monomer **M1**. Said monomer **M2** may be:
- (A) an alkenyl compound containing a functional group, or
- (B) an alkenyl compound without a functional group ; or mixtures thereof.

The alkenyl compound (A) containing a functional group comprises, for example, α,β-unsaturated carboxylic acids such as acrylic acid, methacrylic acid, fumaric acid, crotonic acid, itaconic acid and the like; vinyl ester compounds such as vinyl acetate, vinyl neodecanoate and the like; amide compounds such as acrylamide, methacrylamide, N-methylacrylamide, N-methylmethacrylamide, N-methylolacrylamide, N-methylolmethacrylamide, N-alkylacrylamide, N-alkylmethacrylamide, N,N-dialkylacrylamide, N,N-dialkylmethacrylamide, diacetone acrylamide and the like; acrylic acid esters such as 2-hydroxyethyl acrylate, N-dialkylaminoethyl acrylate, glycidyl acrylate, n-dodecyl acrylate, fluoroalkyl acrylate and the like; methacrylic acid esters such as dialkylaminoethyl methacrylate, fluoroalkyl methacrylate, 2-hydroxyethyl methacrylate, n-octyl methacrylate, t-butyl methacrylate, glycidyl methacrylate, ethylene glycol dimethacrylate and the like; maleic anhydride, and alkenyl glycidyl ether compounds such as allyl glycidyl ether and the like. Among these, preference is given to acrylic acid, methacrylic acid, itaconic acid, fumaric acid, N-methylolacrylamide, N-methylolmethacrylamide, diacetone acrylamide, 2-hydroxyethyl acrylate, 2-hydroxyethyl methacrylate and allyl glycidyl ether. These compounds may be used alone or as a mixture of two or more.

The alkenyl compound without functional group (B) comprises, for example, conjugated dienes such as 1,3-butadiene, isoprene and the like; divinyl hydrocarbon compounds such as divinylbenzene and the like; and alkenyl cyanides such as acrylonitrile, methacrylonitrile and the like. Among these, 1,3-butadiene and acrylonitrile are preferred. These compounds may be used alone or as a mixture of two or more.

It is preferable for the functional alkenyl compound (A) to be used in a proportion of less than 50% by weight relative to the weight of the mixture of monomers and for the alkenyl compound without functional group (B) to be used in a proportion of less than 30% by weight relative to the weight of the mixture of monomers.

According to a preferred embodiment, the binder composition is provided in non-cross-linked form. In an alternative embodiment, the binder composition, as described herein, may undergo crosslinking either by self-condensation of its functional groups or by reaction with a catalyst and/or a crosslinking agent, such as melamine resins, epoxy resins and the like, and also known crosslinking agents of low molecular weight such as di- or higher polyisocyanates, polyaziridines, polycarbodiimides, polyoxazolines, dialdehydes such as glyoxal, acetoacetates, malonates, acetals, di- and trifunctional acrylates and thiols, cycloaliphatic epoxy molecules, organosilanes such as epoxysilanes and aminosilanes, carbamates, diamines and triamines, inorganic chelating agents such as certain zinc and zirconium salts, titaniums, glycourils and other aminoplasts. In certain cases, functional groups originating from other polymerization ingredients, such as surfactants, initiators, seed particles, may be involved in the crosslinking reaction. When two or more functional groups are involved in the crosslinking process, the pairs of complementary reactive groups are, for example, hydroxyl-isocyanate, acid-epoxy, amine-epoxy, hydroxyl-melamine, acetoacetate-acid. The monomers not containing functional groups capable of entering into crosslinking reactions after the polymerization should preferably represent 70% or more by weight of the total mixture of monomers and, more preferably, should be greater than 90% by weight. According to one embodiment, the binder composition comprises a crosslinking agent chosen from the group consisting of isocyanates, diamines, adipic acid, dihydrazides, and combinations thereof.

In the binder composition, the **P1/P2** mass ratio may vary from 99/1 to 5/95, preferably from 95/5 to 50/50, advantageously from 95/5 to 60/40.

In a preferred embodiment, said binder composition has a solution viscosity (9 wt% in NMP) lower than 15000 cP measured at 3.36s-1 on a Brookfield DVII viscometer with a SC24-25 spindle at 25°C. Advantageously, said binder composition has a 9 wt% solution viscosity in NMP lower than 14000 cP, preferably lower than 13000 cP, more preferably lower than 12000 cP, in particular lower than 11000 cP measured at 3.36s⁻¹ on a Brookfield DVII viscometer with a SC24-25 spindle at 25°C.

In a preferred embodiment, the binder composition of the present invention exhibits a morphology of interpenetrating polymer network (IPN) type with chains of polymer **P1** and of hydrophilic polymer **P2** being entangled. The interpenetrating polymer network (IPN) is a polymer comprising two or more networks that are at least partially interlaced on a molecular scale but not covalently bonded to each other and cannot be separated unless chemical bonds are broken. A mixture of two or more preformed polymer networks is not an IPN. In particular, the binder composition of the present invention exhibits a sequential interpenetrating polymer network. The latter is an interpenetrating polymer network prepared by a process in which the second component network is formed following the formation of the first component network. It has been observed that a binder composition according to the present invention exhibiting this morphology has improved adhesion properties compared to the corresponding dry blend. Said interpenetrating polymer network is obtained by polymerizing said at least one monomer **M1** of formula R¹R²C=C(R³)C(O)R (I), and optionally monomers **M2** as defined above, in the presence of said polymer **PI** used as a seed.

In an alternative embodiment, the binder composition is a dry blend of polymer **PI** and hydrophilic polymer **P2** as defined in the present application.

In a second aspect of the present invention, a process for the production of a binder composition is provided.

In a preferred embodiment, said process comprises the steps of:
a) Providing an aqueous solution comprising a polymer **PI** comprising recurring units derived from vinylidene fluoride ;
b) Adding at least one monomer **M1** of formula R¹R²C=C(R³)C(O)R (I) as defined in the present application and optionally one or more monomer(s) from which the recurring units of hydrophilic polymer **P2** derive ;
c) Adding an initiator and initiating the polymerization of said monomer **M1**, and optionally one or more monomer(s) from which the recurring units of hydrophilic polymer **P2** derive, to produce the binder composition according to the present invention. The present process is in particular suitable to prepare a binder composition according to the present invention exhibiting a morphology of interpenetrating polymer network (IPN) type.

In a preferred embodiment, said step b) of the present process is carried out in the absence of chain transfer agent or in the presence of less than 1.2 wt% of chain transfer agent, preferably less than 1.0 wt%, based on the total weight of all the monomer(s) added in step b). Chain-transfer agents are added to the polymerization to regulate the molecular weight of the product. They may be added to a polymerization in a single portion at the beginning of the reaction, or incrementally or continuously throughout the reaction. The amount and mode of addition of chain-transfer agent depend on the activity of the particular chain transfer agent employed, and on the desired molecular weight of the polymer product. Oxygenated compounds such as alcohols, carbonates, ketones, esters, and ethers may serve as chain-transfer agents. Examples of oxygenated compounds useful as chain-transfer agents include isopropyl alcohol, as described in U.S. Pat. No. 4,360,652. Other classes of compounds which may serve as chain-transfer agents in the polymerization of halogen-containing monomers include, for example, halocarbons and hydrohalocarbons, such as chlorocarbons, or mercaptans such as n-dodecyl mercaptans or isooctyl 3-mercaptopropionate. Alkanes such as ethane and propane may also function as chain-transfer agents.

The term initiator refers to a chemical that is capable of providing a source of free radicals, either induced spontaneously, or by exposure to heat or light. Examples of suitable initiators include peroxides, peroxydicarbonates and azo compounds. "Initiators" also includes redox systems useful in providing a source of free radicals. The term "radical" and the expression "free radical" refer to a chemical species that contains at least one unpaired electron. The radical initiator is added to the reaction mixture in an amount sufficient to initiate and maintain the polymerization reaction at a desired reaction rate. The order of addition may vary according to the desired process and latex emulsion characteristics. The radical initiator may comprise a persulfate salt, such as sodium persulfate, potassium persulfate, or ammonium persulfate. The amount of persulfate salt added to the reaction mixture (based upon the total weight of monomer added to the reaction mixture) may, for example, be from about 0.002 to about 1.0 weight percent. The radical initiator may comprise an organic peroxide such as an alkyl, dialkyl, or diacyl peroxide, peroxydicarbonates, and peroxy esters or mixtures thereof. A preferred alkyl peroxide is tert-butyl hydroperoxide. A preferred dialkyl peroxide is di-tert-butylperoxide (DTBP). The organic peroxide may be added to the reaction mixture in an amount from about 0.01 to about 5 weight percent on total monomer, and is preferably added in an amount from about 0.05 to about 2.5 weight percent on total monomer. Preferred peroxydicarbonate initiators are di-n-propyl peroxydicarbonate and diisopropyl peroxydicarbonate, which may be added to the reaction mixture in an amount from about 0.5 to about 2.5 weight percent on total monomer. Peroxy ester initiators include tert-amyl peroxypivalate, tertbutyl peroxypivalate, and succinic acid peroxide. The radical initiator may comprise an azo initiator, such as 2,2'-azobis(2-methylpropionamidine)dihydrochloride. The radical initiator may comprise a redox system. By "redox system" is meant a system comprising an oxidizing agent, a reducing agent and optionally, a promoter as an electron transfer medium. Oxidizing agents include, for example, persulfate salts; peroxides, such as hydrogen peroxide; hydroperoxides such as tert-butyl hydroperoxide and cumene hydroperoxide; and oxidizing metal salts such as, for example, ferric sulfate. Reducing agents include, for example, sodium formaldehyde sulfoxylate, sodium and potassium sulfite, ascorbic acid, bisulfite, metabisulfite, and reduced metal salts. The promoter is a component of the redox system which, in different oxidation states, is capable of reacting with both the oxidant and the reducing agent, thereby accelerating the overall reaction. Promoters include, for example, transition metal salts such as ferrous sulfate. In redox systems, the oxidizing agent and the reducing agent may be utilized in an amount from about 0.01 to about 0.5 weight percent on total monomer. The optional promoter may be utilized in an amount from about 0.005 to about 0.025 weight percent on total monomer. Redox systems are described in G. S. Misra and U. D. N. Bajpai, Prog. Polym. Sci., 1982, 8(1-2), pp. 61-131.

The present process may also be carried out in the presence of surfactant, in particular non-fluorinated surfactants. Among non-fluorinated surfactants, mention can be made of non-ionic emulsifiers, such as notably alkoxylated alcohols, e.g. ethoxylates alcohols, propoxylated alcohols, mixed ethoxylated/propoxylated alcohols; of anionic surfactants, including notably fatty acid salts, alkyl sulfonate salts (e.g. sodium dodecyl sulfate), alkylaryl sulfonate salts, arylalkylsulfonate salts, and the like; of organically modified siloxanes, such as siloxanes modified with polyether, primary hydroxyl groups or double bonds-bearing side chains.

The binder composition obtained by the present process is preferably in the form of a latex, defined as being a colloidal dispersion of polymers dispersed in a continuous (generally aqueous) phase. The product of the polymerization is preferably a latex which may be used in this form, generally after filtering off the solid byproducts of the polymerization process. For the use in the form of a latex, the latex may be stabilized by the addition of a surface-active agent, which may be identical to or different from the surface-active agent present during the polymerization (where appropriate). This surfactant added later may, for example, be an ionic or nonionic surfactant.

The binder composition may alternatively be recovered as powder in order to be redisbursed into water or an organic solvent. Hence, the present process may further comprise a step of drying the binder composition obtained in step c) of the present process.

Therefore, the binder composition of the present invention is preferably a latex or a powder. The binder composition according to the present invention is part of an electrode composition, in particular a positive electrode composition.

In another aspect of the present invention, an electrode composition, in particular a positive electrode composition, is provided. The electrode composition comprises said binder composition according to the present invention, conductive agents and an active material. The conductive agents is preferably selected from the group consisting of carbon blacks, such as acetylene black, Ketjen black; carbon fibers, such as carbon nanotube, carbon nanofiber, vapor growth carbon fiber; metal powders such as SUS powder, and aluminum powder; or mixtures thereof.

The active material is preferably selected from the group consisting of lithium-salts of transition metal oxides, sulfides, phosphate and hydroxides. Preferably, said active material is selected from the group consisting of a lithium metal phosphate having a composition represented by LiMPO₄, M representing Fe, Mn, Co, or Ni, LiCoO₂, LiNiₓCo₁₋ₓO₂, LiMn₂O₂, LiNiO₂, LiNiₓCO_{y}Mn_{z}Oₘ, LiNiₓCo_{y}Al_{z}Oₘ and LiNiₓMn_{y}Al_{z}Oₘ where x+y+z =1 and m is an integer representing the number of oxygen atom in the oxide to provide an electron-balanced molecule.

More preferably, said active material is selected from the group consisting of LiFePO₄ and LiNiₓCo_{y}Mn_{z}Oₘ wherein x is greater than or equal to 0.6, y is lower than or equal to 0.2, z is greater than or equal to 0.2, and x+y+z =1 and m is an integer representing the number of oxygen atom in the oxide to provide an electron-balanced molecule.

In particular, said active material is selected from the group consisting of LiFePO₄ and LiNiₓCo_{y}Mn_{z}Oₘ wherein x is greater than or equal to 0.8, y is lower than or equal to 0.1, z is greater than or equal to 0.1, and x+y+z =1 and m is an integer representing the number of oxygen atom in the oxide to provide an electron-balanced molecule

The electrode composition may further comprise a solvent such as water or an organic solvent. The organic solvent is preferably selected from the group consisting of n-methylpyrrolidone (NMP), dimethylsulfoxide (DMSO), N,N-dimethylformamide (DMF), triethylphosphite (TEP), acetone, cyclopentanone, tetrahydrofuran, methyl ethylketone (MEK), methyl isobutyl ketone (MiBK), ethyl acetate (EA), butyl acetate (BA), ethylene carbonate (EC), propylene carbonate (PC), dimethyl carbonate (DMC), diethyl carbonate (DEC), ethyl methyl carbonate (EMC), gamma-butyrolactone and N-butylpyrrolidone ; and combinations thereof.

The electrode composition is usually prepared by mixing the components, i.e. the binder composition, the active material, the conductive agent and optionally the solvent. When the components are mixed in the presence of an organic solvent, the binder is preferably in a powder form.

In another aspect of the present invention, a positive electrode is provided. Said positive electrode comprises a current collector and said electrode composition according to the present invention disposed on at least one surface on said current collector. Once said electrode composition is disposed on at least one surface on said current collector, the electrode is dried to remove the organic solvent or water.

According to a preferred embodiment, after evaporation of the organic solvent or water, the electrode composition cast on the current collector has the following mass composition:
a. 80% to 99.9% active material, preferably 80% to 99%,
b. 0.05% to 10% conductive agent, preferably 10% to 0.5%,
c. 0.05% to 10% binder composition of the present invention, preferably 10% to 0.5%; the sum of all these percentages being 100%.

The present invention also provides a Li-ion secondary battery. Said Li-ion secondary battery comprises a negative electrode, a positive electrode according to the present invention and a separator between said negative electrode and said positive electrode.

In another aspect of the present invention, an electrochemical device is provided. Said electrochemical device comprises a negative electrode, a positive electrode according to the present invention and an electrolyte comprising lithium.

### EXAMPLES

The following examples non-limitingly illustrate the scope of the invention.

### Preparation of the binder composition (Binders 1 to 4 exhibiting IPN-type morphology)

A polyvinylidene fluoride latex was used as seed for synthesizing the binder composition wherein the PVDF and the hydrophilic polymer forms the interpenetrating network. To a 2 liter reactor were added 1000 g of PVDF latex and 500 g of de-ionized water. A feed of 32g of acrylic monomer mixture (corresponding to the recurring units of the hydrophilic polymer **P2),** 3.2g of 10.0 wt% VAZO-67 solution in tripropylene glycol methyl ether and optionally the chain transfer agent (e.g. isooctyl 3-mercaptopropionate) were added to the reactor. The reactor temperature raised between 50°C and 100°C. 11.0 g of 3.5% tert-butyl hydroperoxide were fed to the reactor. The mixture was agitated and cooled to room temperature. The binder composition was discharged from the reactor. The product can be spray dried into powder or used as latex. All examples were made following the above procedure. The amount of PVDF latex, hydrophilic monomers and chain transfer agent used in each example are listed in table 1 below.

### Preparation of the binder composition (Binder 5 - dry blend)

A binder composition based on a dry blend of a PVDF and a hydrophilic polymer was also prepared. This binder composition is prepared by dry mixing the PVDF used as seed for preparing binder 2 and a hydrophilic polymer **P2** obtained according to the same procedure detailed above except that no PVDF seed is used.

Determination of the Mw of the hydrophilic polymer **P2**

The weight average molecular weight of the hydrophilic polymer **P2** is determined by preparing a hydrophilic polymer according to the same procedure as detailed above except that no polyvinylidene fluoride seed was used, recovering and analyzing by GPC the hydrophilic polymer so-obtained. GPC analysis were carried out on Waters 2695e coupled to a Wyatt Wyatt NEON Refractometer equipped with two PL Gel mixed C columns and a guard column (7.8 mm I.D. × 30 cm, 5 µm) under the following conditions :
- Temperature: 35°C;
- Flow rate: 1.0 mL/min ;
- Injection volume: 100 µL.

Samples were provided as solids and made as 1 mg/mL in THF (HPLC grade). Twelve poly(methylmethacrylate) standards ranging in Mp from 535 to 2,210,000 g/mol were used for calibration. Calibration data was fitted to a cubic polynomial with R2 of at least 0.999.

**[Table 1]**

| Examples | PVDF latex² (g) | MMA (g) | MAA (g) | CTA (%)¹ | Mw^{∗} (g/mol) | Solution viscosity^{∗∗} |
|---|---|---|---|---|---|---|
| Binder 1 - IPN | 1000 | 29 | 3.3 | 0 | 1140000 | 10910 cP |
| Binder 2 - IPN | 1000 | 29 | 3.3 | 0.3 | n.d. | 9086 cP |
| Binder 3 - IPN | 1000 | 29 | 3.3 | 0.6 | 122000 | 8894 cP |
| Binder 4 - IPN | 1000 | 29 | 3.3 | 1.2 | 63200 | 9630 cP |
| Binder 5 - dry blend | 1000 | 29 | 3.3 | 0.6 | 122000 | - |
| Binder 6 (comparative) | 1000 | 0 | 0 | 0 | n.a. | 17500 cP |

| | | | | | | |
|---|---|---|---|---|---|---|
| *¹% based on the amount of methyl methacrylate (MMA) and methyl acrylic acid (MAA); ²PVDF homopolymer ^{∗} Mw of the hydrophilic polymer **P2** (copolymer of MMA and MAA); ^{∗∗} 9% in NMP measured at 3.36s-1 on a Brookfield DVII viscometer with a SC4-25 spindle at 25°C* | | | | | | |

### Preparation of the electrode composition

### NMC as active material

The electrode composition for a cathode was prepared by the wet mixing method. A Binder solution was prepared by dissolving the binder composition in NMP (4.66 g of 9% solution in NMP). Active material (carbon black - 0.42g) was added, mixed, and then diluted with NMP. The wet mixing formulation was prepared using a Thinky ARE-310 mixer. Carbon black was added to a Thinky cup followed by the binder composition in NMP solution. The mixture was mixed at 2000 RPM. Active material (NMC 811 - 27.16 g) was added along with NMP. The total amount of NMP was (3.36 mL). The resulting electrode composition was cast onto aluminum foil using a doctor blade. The electrode was dried in an oven at 120°C to evaporate NMP. The electrode was calendered and then was tested for physical properties. Adhesion was measured in 180° peel test according to ASTM D903. The results are reported in table 2.

**[Table 2]**

| Examples | CTA % | Peel (N/m) |
|---|---|---|
| Binder 1 | 0 | 133 |
| Binder 2 | 0.3 | 142 |
| Binder 3 | 0.6 | 141 |
| Binder 4 | 1.2 | 118 |
| Binder 5 | 0.6 | 125 |
| Binder 6 (comparative) | 0 | 58 |

As clearly demonstrated by the results detailed in table 2, the binder composition according to the present invention provides enhanced properties compared to a binder composition consisting of PVDF only (binder 6). The peel adhesion is further improved when the binder composition exhibits an IPN morphology compared to a dry blend.

### LiFePO₄ as active material

### Peel adhesion

The peel adhesion was also evaluated for electrode composition comprising LiFePO₄ as active material instead of NMC 811. For all formulations, the electrode composition was made with Lenergy N2 Lithium Iron Phosphate (LiFePO4, or LFP) as cathode active material, carbon black (Super P C65) as conductive agent. The weight ratio of active material/conductive agent/binder was 94/3/3. All procedures were performed in a dry room environment (Temperature = 20 °C, dew point = -50 to -60 °C). The electrode composition was casted on aluminum foil with an adjustable 150 mm-wide film applicator (doctor blade, Elcometer 3580/5) to make the electrodes. All electrodes were dried in a convection oven at 120 °C for at least 30 min, and each electrode was sliced into three 1-inch wide strips for peel adhesion measurement. Each electrode strip was calendered at 0.1 MPa with a HSTK-1515H Roll Press to achieve a mass loading of 10.5 to 11.5 mg/cm2, and electrode density of 2~2.1 g/cm3. For the peel evaluation of each formulation, the three electrode strips cut from the same electrode sheet are conditioned in dry room for three days and then measured for 180° peel adhesion with Instron 3340 load frame with a 10N load cell (method is based on ASTM D903). The values are averaged to determine the peel adhesion for each binder sample.

The results are detailed in table 3 below.

**[Table 3]**

| Examples | **P1/P2** mass ratio | Peel Adhesion (N/m) |
|---|---|---|
| Binder 2 | 90/10 | 56.7 |
| Binder 3 | 90/10 | 53.9 |
| Binder 4 | 90/10 | 52.2 |
| Binder 6 (comparative) | 100/0 | 30.3 |

As clearly demonstrated by the results of table 3, the electrode compositions prepared with the binder according to the present invention have improved peel adhesion compared to PVDF alone.

### Slurry stability

The slurry stability was also evaluated by using a Brookfield Cone Plate LVDV-III Ultra viscometer with a rotational method varying the shear rate from 0.1 to 20 s-1 while recording the viscosity. The initial slurry viscosity was measured on the same day of formulation (0d viscosity). Sampling was done right after mixing the slurry in Thinky for 30 s at 2000 rpm. The slurry sample was then rested in the same tightly closed Thinky jar in the dry room until it is time for the 3-day viscosity measurement. All viscosity measurements are conducted inside of a non-dry room laboratory fume hood. The results are detailed in table 4 below.

**[Table 4]**

| Binder | **P1/P2** mass ratio | Initial Slurry Viscosity at 10 s⁻¹ (cPs) | 3-day Slurry Built-up at 10 s⁻¹ |
|---|---|---|---|
| Binder 1 | 90/10 | 6667 | 205.7% |
| Binder 2 | 90/10 | 6885 | 120.2% |
| Binder 6 (comparative) | 100/0 | 5099 | 281.80% |

Binder compositions according to the present invention show better stability over time compared to PVDF alone (binder 6 - comparative).

## Claims

1. Binder composition for positive electrodes comprising a polymer **PI** comprising recurring units derived from vinylidene fluoride and a hydrophilic polymer **P2** comprising at least recurring units derived from at least one monomer **M1** of formula R¹R²C=C(R³)C(O)R (I) wherein R¹, R² and R³ are independently selected from the group consisting of H and C₁-C₅ alkyl ; R is selected from the group consisting of - NHC(CH₃)₂CH₂C(O)CH₃, -NR'R"or -OR' wherein R' and R" are independently selected from the group consisting of H and C₁-C₁₈ alkyl groups, optionally substituted by one or more hydroxyl, thiol or amino functional group(s) or a five- to six-membered heterocycle comprising at least one nitrogen atom in the ring ;
**characterized in that** the weight average molecular weight of said hydrophilic polymer **P2** is greater than 30000 g/mol, advantageously greater than 50000 g/mol, preferably greater than 65000 g/mol, more preferably greater than 80000 g/mol.

2. Binder composition according to the preceding claim wherein said polymer **PI** and said hydrophilic polymer **P2** form an interpenetrating polymer network.

3. Binder composition according to the preceding claim wherein said interpenetrating polymer network is obtained by polymerizing at least one said monomer **M1** of formula R¹R²C=C(R³)C(O)R (I) in the presence of said polymer **PI** used as a seed.

4. Binder composition according to any one of the preceding claims wherein said polymer **PI** is selected from the group consisting of polyvinylidene fluoride homopolymers and copolymers based on polyvinylidene fluoride comprising at least one comonomer compatible with vinylidene fluoride.

5. Binder composition according to the preceding claim wherein said comonomer is selected from the group consisting of vinyl fluoride, tetrafluoroethylene, hexafluoropropylene, trifluoropropenes, tetrafluoropropenes, hexafluoroisobutylene, perfluorobutylethylene, pentafluoropropenes, perfluoroalkyl vinyl ethers, bromotrifluoroethylene, chlorofluoroethylene, chlorotrifluoroethylene, chlorotrifluoropropene and ethylene, or mixture thereof.

6. Binder composition according to any one of the preceding claims wherein said polymer **PI** comprises monomer units bearing at least one of the following functions: carboxylic acid, carboxylic acid anhydride, carboxylic acid ester, epoxy groups, amide, hydroxyl, carbonyl, mercapto, sulfide, oxazoline, phenolic, ester, ether, siloxane, sulfonic, sulfuric, phosphoric or phosphonic.

7. Binder composition according to any one of the preceding claims wherein said hydrophilic polymer **P2** comprises at least recurring units derived from at least one monomer **M1** selected from the group consisting of acrylic acid, methacrylic acid, methyl acrylate, methyl methacrylate, ethyl acrylate, propyl acrylate, n-butyl acrylate, isobutyl acrylate, t-butyl acrylate, n-dodecyl acrylate, amyl acrylate, isoamyl acrylate, hexyl acrylate, 2-ethylhexyl acrylate, diacetone acrylamide, lauryl acrylate, n-octyl acrylate, ethyl methacrylate, propyl methacrylate, n-butyl methacrylate, isobutyl methacrylate, t-butyl methacrylate, n-dodecyl methacrylate, amyl methacrylate, isoamyl methacrylate, hexyl methacrylate, 2-ethylhexyl methacrylate, lauryl methacrylate, n-octyl methacrylate, 2-hydroxyethyl methacrylate, 2-hydroxypropyl acrylate, 4-hydroxybutyl methacrylate, and combinations thereof.

8. Binder composition according to any one of the preceding claims wherein the mass ratio **P1/P2** varies from 99/1 to 5/95.

9. Process for the production of a binder composition comprising the steps of:
a) Providing an aqueous solution comprising a polymer **PI** comprising recurring units derived from vinylidene fluoride ;
b) Adding at least one monomer **M1** of formula R¹R²C=C(R³)C(O)R (I) as defined in any of the preceding claims and optionally one or more monomer(s) from which the recurring units of hydrophilic polymer **P2** derive;
c) Adding an initiator and initiating the polymerization of said monomer **M1**, and optionally one or more monomer(s) from which the recurring units of hydrophilic polymer **P2** derive, to produce the binder composition according to any of one the preceding claims.

10. Process according to the preceding claim wherein step b) in carried out in the absence of chain transfer agent or in the presence of less than 1.2 wt% of chain transfer agent, preferably less than 1.0 wt%, based on the total weight of all the monomer(s) added in step b).

11. Electrode composition comprising said binder composition according to any one of the preceding claims, conductive agents and an active material.

12. Electrode composition according to the preceding claim wherein said conductive agents comprise one or more material selected from carbon black, carbon nanotubes, carbon fibers, or metal powders.

13. Electrode composition according to any one of the preceding claims 11 to 12 wherein said active material is selected from the group consisting of lithium-salts of transition metal oxides, sulfides, phosphate and hydroxides ; preferably said active material is selected from the group consisting of a lithium metal phosphate having a composition represented by LiMPO₄, M representing Fe, Mn, Co, or Ni, LiCoO₂, LiNiₓCo₁₋ₓO₂, LiMn₂O₂, LiNiO₂, LiNiₓCO_{y}Mn_{z}Oₘ, LiNiₓCo_{y}Al_{z}Oₘ and LiNiₓMn_{y}Al_{z}Oₘ where x+y+z =1 and m is an integer representing the number of oxygen atom in the oxide to provide an electron-balanced molecule ; in particular said active material is selected from the group consisting of LiFePO₄ and LiNiₓCO_{y}Mn_{z}Oₘ wherein x is greater than or equal to 0.6, y is lower than or equal to 0.2, z is greater than or equal to 0.2, and x+y+z =1 and m is an integer representing the number of oxygen atom in the oxide to provide an electron-balanced molecule.

14. Positive electrode comprising a current collector and an electrode composition according to any one of the preceding claims 11 to 13 disposed on at least one surface on said current collector.

15. Li-ion secondary battery comprising a negative electrode, a positive electrode according to claim 14 and a separator between said negative electrode and said positive electrode.

16. An electrochemical device comprising a negative electrode, a positive electrode according to claim 14, and an electrolyte comprising lithium.
